# FASCICULE DE BREVET EUROPEEN

(11) **EP 3 878 563 B1**
(45) Date de publication et mention de la délivrance du brevet: **02.08.2023**
(21) Numéro de dépôt: 21161802.0
(22) Date de dépôt: 10.03.2021
(51) Int. Cl.: B05B 14/48, B05B 16/40, B05B 7/14

(54) **EMBASE POUR UNE CABINE DE POUDRAGE**
SOCKEL FÜR EINE PULVERBESCHICHTUNGSKABINE
BASE FOR A POWDERING CABIN

(30) Priorité: 11.03.2020 FR 2002427
(43) Date de publication de la demande: 15.09.2021
(73) Titulaire: Exel Industries, 51200 Epernay (FR)
(72) Inventeur: ROBERT, Stéphane, 75009 PARIS (FR); VIGNON, Pascal, 75009 PARIS (FR)
(74) Mandataire: Lavoix

(56) Documents cités:
- CN-A- 103 008 160
- DE-A1- 3 406 464
- DE-A1- 19 500 872
- DE-U- 7 014 433
- US-A- 5 256 201

## Description

La présente invention concerne une embase pour une cabine de poudrage, ainsi qu'une cabine de poudrage comprenant une telle embase.

US5256201 A décrit une cabine de poudrage avec une unité de filtrage latérale, la cabine de poudrage présentant notamment un plancher incliné à un angle d'au moins 6° et au travers duquel de l'air comprimé circule de bas en haut. CN 103 008 160 décrit une cabine de poudrage présentant un plancher qui comprend deux pans obliques jointifs à leurs bords supérieur respectifs.

On connait une cabine de poudrage, pour appliquer un revêtement, tel qu'une peinture, sur un article, par poudrage électrostatique dudit article à l'intérieur d'un compartiment de poudrage de la cabine. L'application de la poudre sur l'article est effectuée à l'aide d'un projecteur de poudre qui projette la poudre sur l'article dans le compartiment de poudrage. La poudre est attirée sur l'article par effet électrostatique, la poudre et l'article étant portés à des potentiels électrostatiques spécifiques. Une fois le poudrage de l'article effectué, l'article est transporté dans un four pour entraîner une réticulation d'un matériau thermodurcissable constituant la poudre et ainsi fixer le revêtement sur l'article.

Une partie non négligeable de la poudre émise par le projecteur lors du poudrage de l'article n'atteint pas l'article et tend à se déposer sur les parois et sur le plancher de la cabine du compartiment de poudrage. La cabine est équipée d'un système d'aspiration de poudre résiduelle, mettant l'intérieur du compartiment de poudrage en dépression pour récupérer l'essentiel de cette poudre en vue de la recycler et de la mélanger avec de la poudre neuve pour le poudrage d'articles subséquents. Une partie de ce système d'aspiration est généralement formée au sein d'une embase de la cabine, sous le plancher, pour récupérer la poudre accumulée sur le plancher. Néanmoins, malgré ce système d'aspiration, de la poudre résiduelle reste généralement attachée aux parois et au plancher, de sorte qu'il est nécessaire de nettoyer régulièrement le compartiment de poudrage, notamment si l'on souhaite changer de type de poudre, par exemple pour un changement de couleur, ce qui prend du temps. Le plancher de la cabine est généralement plat et horizontal pour faciliter le nettoyage de la poudre résiduelle par un opérateur. Par ailleurs, la mise en oeuvre d'un système d'aspiration puissant consomme une quantité substantielle d'énergie, ce qui présente un impact sur l'environnement et sur le prix de revient de l'opération de poudrage.

L'invention vise à porter remède aux inconvénients de l'art antérieur en fournissant une nouvelle embase pour une cabine de poudrage, grâce à laquelle l'accumulation de poudre résiduelle est réduite.

L'objet de l'invention est défini par la revendication 1.

De préférence, l'embase comprend un moyen d'introduction d'air sous pression sous les pans obliques, pour que l'air sous pression ainsi introduit traverse les pans obliques vers l'intérieur du compartiment de poudrage, pour décrocher la poudre résiduelle présente sur les pans obliques. Comme moyen d'introduction, l'embase comprend par exemple une ou plusieurs ouvertures d'admission d'air comprimé, connectée(s) à une source d'air comprimé, pour introduire l'air sous pression à l'intérieur d'un logement de l'embase, le logement étant formé sous ledit au moins un pan oblique et délimité par ledit au moins un pan oblique. De préférence, le logement est délimité longitudinalement par deux parois transversales de contour appartenant au socle, transversalement par deux cloisons longitudinales appartenant au socle, en bas par une paroi de fond appartenant au socle, et en haut par ledit au moins un pan oblique.

De préférence, l'embase comprend un vibrateur, qui est configuré pour mettre en vibration les pans obliques par rapport au socle. Si le vibrateur est prévu, le vibrateur est préférentiellement reçu à l'intérieur du logement. Si la poutre est prévue, la poutre est avantageusement agencée à l'intérieur du logement.

La mise en vibration dudit au moins un pan oblique combinée au fait que ledit au moins un pan oblique présente une inclinaison par rapport à l'horizontale lorsque le socle repose sur le sol, permet que la poudre résiduelle reçue sur le pan oblique ruisselle le long du pan oblique. Le pan oblique est préférentiellement orienté pour que la poudre résiduelle ruisselle en direction d'une gouttière formée par le socle de l'embase, à partir de laquelle la poudre résiduelle peut être récupérée par aspiration. La puissance d'aspiration requise s'en trouve réduite, puisque le pan oblique permet de concentrer la poudre résiduelle dans une zone prédéterminée de l'embase, par exemple ladite gouttière. Aussi, l'accumulation de poudre résiduelle sur le plancher lui-même est réduite, puisque le pan oblique achemine automatiquement la poudre résiduelle grâce à son inclinaison et au vibrations produites par le vibrateur. La nécessité d'un nettoyage de la poudre résiduelle par un opérateur s'en trouve également réduite.

En variante, l'embase est dépourvue de vibrateur, ou le vibrateur est facultatif.

D'autres caractéristiques avantageuses et optionnelles de l'invention sont décrites dans ce qui suit.

De préférence, chaque pan oblique présente une inclinaison d'un angle compris entre 5 et 45 degrés par rapport à l'horizontale, lorsque l'embase repose sur le sol par l'intermédiaire du socle, de préférence entre 10 et 20 degrés.

De préférence, le socle comprend deux parois de contour transversales opposées, chaque pan oblique reliant les deux parois de contour transversales entre elles ; et l'embase comprend une poutre supportant les pans obliques et le vibrateur, s'étendant sous les pans obliques, et comprenant deux extrémités de poutre opposées, par l'intermédiaire desquelles la poutre est attachée respectivement aux deux parois de contour transversales.

De préférence, chaque extrémité de poutre est attachée à l'une des deux parois de contour transversales par l'intermédiaire d'au moins un plot antivibratoire appartenant à l'embase.

De préférence, chaque pan oblique présente un bord inférieur qui est fixement attaché à une cloison longitudinale appartenant au socle ; le socle comprend au moins une gouttière longitudinale, qui est délimitée par la cloison longitudinale, s'étend sous le plancher, est ouverte en direction du plancher, et présente une extrémité d'évacuation par l'intermédiaire de laquelle ladite au moins une gouttière débouche à l'extérieur de l'embase ; le plancher comprend au moins un volet escamotable qui est mobile entre : une position déployée, dans laquelle ledit au moins un volet escamotable recouvre ladite au moins une gouttière longitudinale, et une position ouverte, dans laquelle ledit au moins un volet escamotable découvre ladite au moins une gouttière longitudinale comparativement à position déployée.

De préférence, ledit au moins un volet escamotable est mobile entre la position déployée et la position ouverte en étant rotatif par rapport au socle.

De préférence, l'embase comprend un moyen d'introduction d'air sous pression sous les pans obliques, l'embase étant configurée pour que l'air sous pression ainsi introduit traverse les pans obliques poreux vers l'intérieur du compartiment de poudrage, pour décrocher de la poudre résiduelle présente sur les pans obliques.

De préférence, le plancher comprend un tissu tendu qui forme les pans obliques.

L'invention concerne également une cabine de poudrage comprenant une embase telle que définie ci-avant, et le compartiment de poudrage, qui est supporté par le socle et dont le bas est délimité par le plancher.

L'invention et les avantages de celle-ci apparaîtront plus clairement à la lumière de la description qui suit d'exemples conformes à l'invention, donnée dans un but non limitatif, et faite en référence aux dessins annexés dans lesquels :
[Fig 1] La figure 1 est une vue de face d'une cabine de poudrage comprenant une embase selon un mode de réalisation conforme à l'invention.
[Fig 2] La figure 2 est une coupe partielle de la cabine de poudrage de la figure 1, montrant l'embase plus en détails.
[Fig 3] La figure 3 est une vue de côté de la cabine de poudrage des figures précédentes, montrant un trait de coupe II-II de la figure 2.

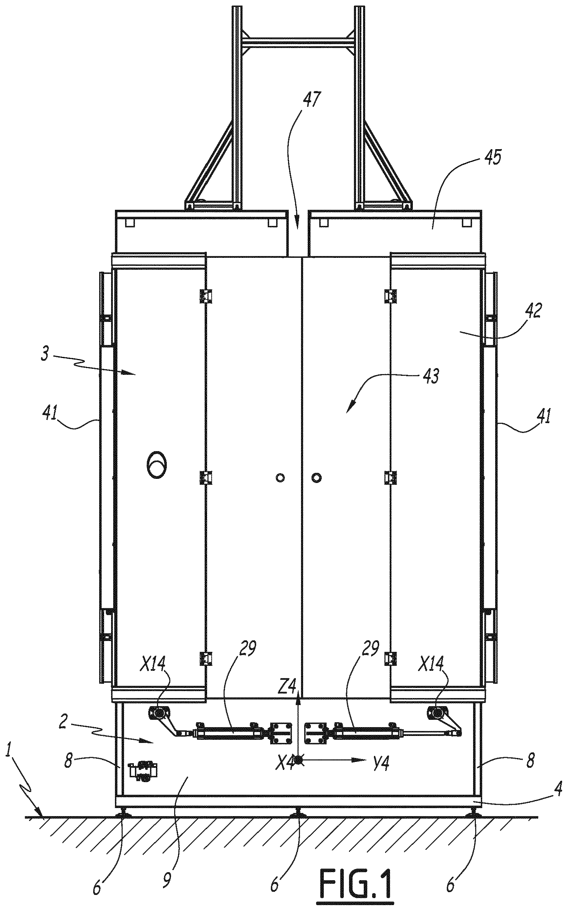

Les figures 1 à 3 montrent une cabine de poudrage, qui repose sur un sol 1 qui est plan et horizontal. La cabine de poudrage comprend une embase 2 et un compartiment de poudrage 3.

La cabine de poudrage est destinée à loger une opération d'application d'un revêtement, tel qu'une peinture, sur un article, par poudrage électrostatique dudit article à l'intérieur du compartiment de poudrage 3.

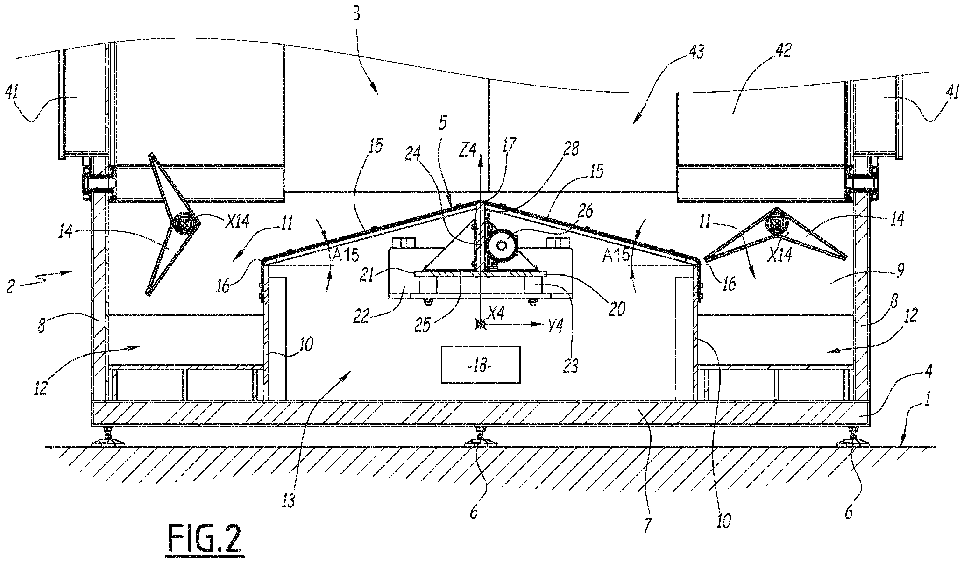

L'embase 2 comprend un socle 4, visible sur les figures 1 à 3, et un plancher 5, visible sur la figure 2.

On définit une direction longitudinale X4 et une direction transversale Y4, qui sont horizontales et perpendiculaires lorsque la cabine repose sur le sol, ainsi qu'une direction de hauteur Z4, perpendiculaire aux directions X4 et Y4 et dirigée vers le haut lorsque la cabine repose sur le sol. Les directions X4, Y4 et Z4 sont fixes par rapport au socle 4.

Le compartiment de poudrage 3 est délimité, pour le bas, par le plancher 5, qui forme un sol surélevé pour le compartiment 3. Le compartiment 3 comprend deux parois principales longitudinales 41 opposées et parallèles aux directions X4 et Z4. Le compartiment 3 comprend deux parois principales transversales 42 opposées et parallèles aux directions Y4 et Z4. Les parois 41 et 42 forment une enceinte fermée qui s'élève à partir du périmètre du plancher 5, pour délimiter le compartiment 3.

Le compartiment de poudrage 3 comprend au moins une ouverture pour l'introduction et/ou le retrait de l'article à revêtir jusqu'à l'intérieur du compartiment 3. Chaque ouverture 43 est préférentiellement ménagée au travers de l'une des parois 42. L'ouverture 43 peut être fermée, par exemple à l'aide de deux portes du compartiment 3, portées par la paroi 42 concernée. Sur la figure 1, l'ouverture 43 est montrée fermée par les portes, qui sont des portes battantes.

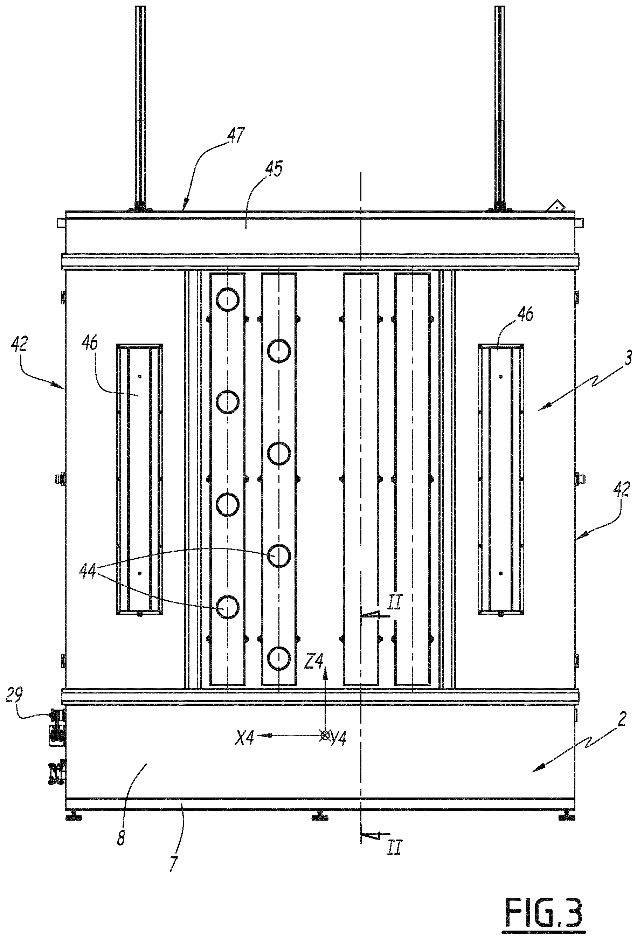

Le compartiment de poudrage 3 comprend au moins une ouverture 44, de préférence plusieurs ouvertures, par exemple huit ouvertures 44. Chaque ouverture 44 est prévue pour être traversée par un projecteur de poudre, par exemple un pistolet à peinture électrostatique, afin que ce projecteur de poudre puisse projeter de la poudre à l'intérieur du compartiment 3 pour le revêtement de l'article qui y a été introduit. Comme cela est visible sur la figure 3, les ouvertures 44 sont ménagées au travers des parois 41.

Le compartiment 3 comprend avantageusement un toit 45, délimitant le haut du compartiment en fermant les parois 41 et 42 par le haut. Le toit 45 est préférentiellement fendu sur toute sa longueur d'une encoche longitudinale 47, pour le passage d'un convoyeur sur lequel l'article est suspendu, et chargé de déplacer l'article jusque dans le compartiment 3 en passant par l'ouverture 43, de positionner l'article au sein du compartiment 3 pour que l'article soit revêtu de poudre, et d'extraire l'article hors du compartiment 3 par la même ouverture 43 ou par une autre ouverture similaire prévue à la paroi 42 opposée.

De préférence, le compartiment 3 est entièrement ou essentiellement réalisé en matière plastique polymère, ou pour le moins dans un matériau diélectrique.

La poudre projetée par les projecteurs est attirée sur l'article par effet électrostatique, la poudre et l'article étant portés à des potentiels électrostatiques spécifiques. Ce poudrage cause un dépôt de poudre résiduelle au bas du compartiment de poudrage 3.

L'embase 2 présente avantageusement une configuration opérationnelle et une configuration de nettoyage. La configuration opérationnelle est mise en oeuvre au moins pendant le poudrage de l'article dans le compartiment 3, alors que la configuration de nettoyage est mise en oeuvre lorsqu'aucun article n'est en train d'être poudré. La configuration de nettoyage est par exemple mise en oeuvre pour un changement de poudre, par exemple pour un changement de couleur. Pendant le poudrage, les ouvertures 43 sont préférentiellement ouvertes pour permettre une admission d'air dans le compartiment 3, sous l'effet d'une aspiration d'air effectuée par un système d'aspiration de poudre connecté à l'embase 2. En configuration de nettoyage, on prévoit avantageusement que les ouvertures 43 sont fermées.

C'est par l'intermédiaire du socle 4 que la cabine repose sur le sol 1, de sorte que le socle 4 constitue un partie fixe de l'embase 2, plus généralement, de la cabine. Le socle 4 supporte le reste de la cabine par le bas. Pour cela, le socle 4 comprend par exemple des pieds 6 en appui sur le sol 1, ainsi qu'une paroi de fond 7 parallèle aux axes X4 et Y4, supportée par les pieds 6.

De manière optionnelle, le compartiment 3 comporte des lampes 46, portées par les parois 41, pour éclairer l'intérieur du compartiment 3.

Le socle 4 comprend aussi quatre parois de contour, s'élevant du périmètre de la paroi de fond 7 et formant une enceinte définissant un contour fermé du socle 4. Les parois de contour comprennent deux parois de contour longitudinales 8 opposées et deux parois de contour transversales 9 opposées. Les parois longitudinales 8 sont parallèles aux directions X4 et Z4. Les parois transversales 9 sont parallèles aux directions Y4 et Z4.

De préférence, les parois 41 s'élèvent à partir des parois 8, et les parois 42 s'élèvent à partir des parois 9.

Le socle 4 comprend également deux cloisons intérieures 10 longitudinales. Les cloisons intérieures 10 sont parallèles aux parois de contour longitudinales 8, et sont réparties entre les parois de contour longitudinales 8. En d'autres termes, chaque cloison 10 s'étend parallèlement aux directions X4 et Z4. Les cloisons 10 s'élèvent à partir de la paroi de fond 7 et relient entre elles les parois transversales 9. Selon la direction Z4, les cloisons 10 sont préférentiellement moins hautes que les parois de contour 8 et 9 de sorte à ne pas en dépasser.

Le socle 4 définit deux gouttières longitudinales 11. Chaque gouttière 11 présente une section en « U ». Chaque gouttière 11 est ouverte vers le haut, c'est-à-dire dans la direction Z4, de préférence sur toute sa longueur. Les gouttières 11 sont réparties à égale distance l'une de l'autre, selon la direction Y4, de façon à être agencées latéralement au sein de l'embase 2. En particulier, chaque gouttière 11 est délimitée par l'une des parois de contour longitudinales 8, par la cloison 10 qui est la plus proche de cette paroi 8, et par la paroi de fond 7.

Parallèlement à la direction X4, chaque gouttière 11 présente deux extrémités longitudinales, par exemple respectivement au niveau des parois 9. L'une des extrémités longitudinales de chaque gouttière 11 constitue une extrémité d'évacuation 12 de ladite gouttière 11, ici l'extrémité longitudinale à l'opposé de la direction X4, comme montré sur la figure 2. Chaque extrémité d'évacuation 12 ménage une ouverture traversante au travers de la paroi de contour transversale 9. Plus généralement, on prévoit que chaque gouttière 11 débouche à l'extérieur de l'embase 2, parallèlement à la direction X4, par l'intermédiaire de son extrémité d'évacuation 12 respective. De préférence, le système d'aspiration de poudre, disposé hors de l'embase 2 et hors de la cabine, est connecté aux extrémités d'évacuation 12, pour aspirer de la poudre résiduelle présente dans les gouttières 11, par mise en dépression du volume délimité par les gouttières 11. Cette mise en dépression tend à attirer la poudre résiduelle présente dans le compartiment 3 jusqu'aux gouttières 11. La poudre résiduelle aspirée est ensuite préférentiellement recyclée.

Entre les gouttières 11, le socle 4 définit un logement 13 en forme de récipient. Le logement 13 est interposé entre les gouttières 11 selon la direction Y4. En particulier, le logement 13 est délimité, selon la direction Y4, par les cloisons 10, selon la direction X4, par les parois 9, et, à l'opposé de la direction Z4, par la paroi de fond 7. Le logement 13 est ouvert dans la direction Z4.

De préférence, le socle 4 est entièrement ou essentiellement réalisé en matière plastique polymère, ou pour le moins dans un matériau diélectrique, hormis éventuellement les pieds 6.

Comme visible sur la figure 2, le plancher 5 est supporté par le socle 4. Le plancher 5 est en plusieurs parties, qui sont toutes supportées par le socle 4. Le plancher 5 délimite le haut de l'embase 2, selon la direction Z4, et le bas du compartiment de poudrage 3. Le plancher 5 est à l'opposé de la paroi 7 selon la direction Z4, et s'étend, dans la direction Y4, de l'une des parois de contour longitudinales 8 à l'autre, et, dans la direction X4, de l'une des parois de contour transversales 9 à l'autre. Comme expliqué ci-après, lors de l'utilisation de la cabine pour le poudrage de l'article, le plancher 5 reçoit de la poudre résiduelle causée par ce poudrage, la poudre résiduelle se déposant sur le dessus du plancher 5.

Comme montré sur la figure 2, le plancher 5 comprend une partie centrale, constituée par deux pans obliques 15, ainsi que préférentiellement deux volets escamotables longitudinaux 14 disposés latéralement par rapport à la partie centrale. Les pans 15 et les volets 14 délimitent le bas du compartiment 3. Les gouttières 11 s'étendent sous le plancher 5, en particulier respectivement sous les volets 14. Les gouttières 11 étant ouvertes selon la direction Z4, lesdites gouttières 11 sont ouvertes en direction du plancher 5, à savoir respectivement en direction des volets 14.

Chaque pan oblique 15 est avantageusement de forme générale plane et préférentiellement rectangulaire. Chaque pan oblique 15 s'étend de l'une des parois transversales de contour 9 à l'autre. Chaque pan oblique 15 est incliné par rapport à l'horizontale lorsque la cabine repose sur le sol 1 par l'intermédiaire du socle 4. Plus précisément, chaque pan oblique 15 est incliné par rapport à un plan dirigé selon les directions X4 et Y4. De préférence, chaque pan oblique 15 est incliné en étant parallèle à la direction X4, en étant pivoté autour de la direction X4, comme montré sur la figure 2. On prévoit préférentiellement que chaque pan oblique 15 présente une inclinaison d'un angle A15 compris entre 5 et 45 degrés, de sorte à ne pas encombrer le bas du compartiment de poudrage 3 tout en permettant un bon écoulement de la poudre résiduelle présente sur le dessus de chaque pan oblique 15. L'angle A15 est défini entre le plan horizontal, c'est-à-dire dirigé selon les directions X4 et Y4, et le plan du pan 15 concerné, préférentiellement autour d'un axe dirigé selon la direction X4. L'angle A15 est préférentiellement compris entre 10 et 20 degrés pour un écoulement optimal de la poudre résiduelle.

En étant incliné, chaque pan oblique 15 définit un bord inférieur 16, qui est parallèle à la direction X4, et qui relie avantageusement les parois 9 entre elles, ainsi qu'un bord supérieur 17, qui est parallèle au bord 16 et qui relie avantageusement les parois 9 entre elles. Pour chaque pan oblique 15, le bord 17 est disposé plus haut que le bord 16, en considération de la direction Z4, du fait de l'inclinaison du pan 15. Selon la direction Z4, les deux bords 16 ne dépassent pas des parois 8 et 9. Les bords 16 des deux pans sont avantageusement situés au même niveau selon la direction Z4, comme montré sur la figure 2.

Pour chaque pan oblique 15, le bord inférieur 16 est fixement attaché, de préférence sur toute sa longueur, à un bord supérieur de l'une des cloisons 10.

Les pans obliques 15 sont avantageusement tournés à l'opposé l'un de l'autre. Les pans obliques 15 sont jointifs tout le long de leur bord supérieur 17 respectif. C'est ainsi que les pans obliques 15 sont disposés selon une forme de toit à deux pentes. On observe sur la figure 2 que les pans obliques 15 sont disposés de sorte à définir une section transversale en chevron dont la pointe est tournée vers le haut, c'est-à-dire en « V » renversé. Le bord supérieur 17 des pans 15 constitue préférentiellement le point le plus haut du plancher 5, selon la direction Z4. A leur bord supérieur 17 respectif, les pans obliques 15 forment une arête de cime, qui est avantageusement parallèle à la direction X4. De préférence, les pans obliques 15 sont disposés symétriquement par rapport à un plan vertical, c'est-à-dire par exemple un plan dirigé par les axes X4 et Z4.

Les pans obliques 15 recouvrent entièrement le logement 13, en obturant l'ouverture délimitée par les cloisons 10 et les parois 9, à la façon d'un chapiteau. Le logement 13 ainsi obturé constitue avantageusement une enceinte fermée, ou pour le moins séparée du compartiment de poudrage 3, de façon étanche à la poudre résiduelle, optionnellement perméable à l'air.

Grâce à l'inclinaison des pans obliques 15, la poudre résiduelle qui pourrait se déposer sur le dessus des pans obliques 15 a tendance à glisser ou à s'écouler des pans 15 du bord supérieur 17 vers le bord inférieur 16, et à tomber dans les gouttières 11.

Selon l'invention, chaque pan oblique 15 est poreux, de façon à être perméable à l'air, pour être traversé par de l'air, tout en étant imperméable à la poudre résiduelle, c'est-à-dire à la poudre utilisée pour le poudrage électrostatique de l'article au sein du compartiment 3. Par exemple, chaque pan oblique 15 présente des pores suffisamment étroits pour autoriser le passage de l'air au travers du pan oblique 15, tout en empêchant sensiblement le passage de la poudre, alors que la poudre présente une granulométrie minimale comprise entre 5 et 100 micromètres.

Chaque pan oblique 15 étant ainsi poreux, on prévoit avantageusement que l'embase 2 présente une ouverture 18 débouchant sous les pans obliques 15, c'est-à-dire débouchant à l'intérieur du logement 13. Par exemple, l'ouverture 18 est ménagée au travers de l'une des parois 9. L'ouverture 18 est configurée pour être connectée à une source d'air comprimé, afin d'introduire de l'air sous pression à l'intérieur du logement 13, à des fins de nettoyage des pans obliques 15. En ce sens, l'ouverture 18 constitue un moyen d'introduction d'air sous pression sous les pans 15. De préférence, l'introduction d'air sous pression à l'intérieur du logement 13 est effectué soit en continu, soit par cycles temporisés en fonction de la quantité de poudre retenue sur les pans obliques 15. L'air émis vers l'intérieur du compartiment 3 depuis la partie centrale du plancher 5 décroche toute poudre résiduelle présente sur les pans 15, ladite poudre étant alors évacuée vers les gouttières 11, sous l'effet de l'aspiration au travers des extrémités 12.

De préférence, le plancher 5 comprend un tissu tendu qui forme les pans obliques 15. De préférence, les deux pans obliques 15 sont formés par une même nappe de tissu, constituant ledit tissu, la nappe de tissu étant conformée selon les deux pans 15. De préférence, le tissu est attaché aux cloisons 10 par l'intermédiaire des bords inférieurs 16.

De préférence, le tissu est un tissu tissé de fils de chaîne et de trame continus. Le tissu est avantageusement un tissu élastique. Toutefois un tissu non extensible peut être choisi.

La mise en oeuvre de pans 15 en tissu permet avantageusement d'obtenir la porosité susmentionnée pour être traversé par l'air sous pression tout en étant imperméable à la poudre. Dans ce cas, le tissu est choisi avec une ouverture de maille suffisante pour être perméable à l'air soufflé au travers des pans obliques 15, tout en étant imperméable à la poudre.

Pour le mode de réalisation particulier indépendant de l'invention, en variante, on prévoit que le tissu, ou tout autre matériau formant les pans obliques 15, est étanche à l'air, dans le cas où aucun soufflage d'air n'est prévu au travers des pans obliques 15.

L'embase 2 comprend avantageusement une poutre 20. La poutre 20 s'étend avantageusement sous les pans obliques 15, en particulier sous le bord supérieur 17 des pans 15 en étant à hauteur des bords inférieurs 16, selon la direction Z4. La poutre 20 est agencée à l'intérieur du logement 13. La poutre 20 est préférentiellement parallèle à la direction X4. Dans le présent exemple, la poutre 20 présente un profil transversal en Té renversé. De préférence, la poutre 20 comprend une membrure principale 24 parallèle aux directions X4 et Z4, qui présente un bord supérieur 28 tourné vers le haut. Dans le cas d'un profil en Té, un bord inférieur de cette membrure principale 24 est attaché à une membrure auxiliaire 25 de la poutre 20, orientée parallèlement aux axes X4 et Y4.

De préférence, la poutre 20 soutient les bords supérieurs 17 respectifs des pans obliques 15, de préférence par l'intermédiaire du bord supérieur 28 de la membrure principale 24. A la façon similaire d'une poutre faîtière, la poutre 20 supporte donc l'arête de cime de la partie centrale du plancher 5. De préférence, dans le cas où les pans 15 sont formés par le tissu susmentionné, la poutre 20 sert de tenseur des pans 15 en appliquant un effort tenseur sur le tissu par rapport au socle 4, l'effort tenseur étant orienté selon la direction Z4, le tissu étant retenu par les bords inférieurs 16.

La poutre 20 comprend deux extrémités de poutre 21, qui sont des extrémités longitudinales. Chaque extrémité de poutre 21 rattache la poutre 20 à l'une des parois de contour transversales 9. En particulier, chaque paroi 9 supporte une équerre 22 respective appartenant au socle 4, l'équerre 22 étant fixée sur une face intérieure de la paroi 9, à l'intérieur du logement 13. Chaque équerre 22 supporte l'une des extrémités 21 de la poutre 20, de préférence par l'intermédiaire de deux plots antivibratoires 23. En particulier, les plots antivibratoires 23 sont interposés entre la membrure 25 et une partie saillante de l'équerre 22, s'étendant parallèlement aux directions X4 et Y4. Dans le présent exemple, la poutre 20 est donc supportée par quatre plots antivibratoires sur le socle 4, de sorte qu'une mise en vibration de la poutre 20 s'effectue sans mise en vibration du socle 4, ou avec une quantité de vibrations réduite.

De préférence, la poutre 20 est réglable en hauteur, c'est-à-dire que la position de la poutre 20 par rapport au socle 4 selon la direction Z4 peut être ajustée. Dans le cas où les pans 15 sont en tissu, cela permet avantageusement de régler la tension du tissu, par l'intermédiaire du bord supérieur 28 de la poutre 20. Pour cela, par exemple, on prévoit que chaque extrémité 21 de la poutre 20 est liée à son équerre 22 respective par une ou plusieurs tiges filetées, dont le vissage permet de régler la distance entre l'extrémité 21 concernée et l'équerre 22 selon la direction Z4.

L'embase 2 comprend un vibrateur 26, qui est configuré pour mettre en vibration les pans obliques 15 par rapport au socle 4. Cette mise en vibration favorise le glissement ou écoulement de la poudre résiduelle reçue sur le dessus des pans 15, du bord supérieur 17 vers le bord inférieur 16, et en particulier vers les gouttières 11. Il est préféré que les pans 15 soient en tissu, ce qui facilite la transmission de la vibration aux pans 15, sans faire vibrer le reste de la cabine.

Le vibrateur 26 est avantageusement supporté par la poutre 20, en étant fixé sur la poutre 20, par exemple à mi-chemin entre les parois de contour transversales 9, comme montré sur la figure 2. De préférence, le vibrateur 26 est un vibrateur pneumatique ou électrique.

Chaque volet 14 est préférentiellement agencé sensiblement à la même hauteur que les pans 15, selon la direction Z4. Chaque volet 14 s'étend avantageusement de l'une des parois transversales de contour 9 à l'autre, en y étant attaché par des extrémités longitudinales du volet 14. Chaque volet 14 comprend avantageusement deux pans inclinés de façon à présenter un profil transversal en forme de chevron.

Chaque volet escamotable 14 est mobile par rapport au socle 4, par exemple en étant rotatif autour d'un axe de rotation X14 respectif, qui est un axe propre du volet 14, parallèle à la direction X4. Chaque volet 14 est mobile entre une position déployée montrée pour le volet 14 à droite de la figure 2, et une position ouverte montrée pour le volet 14 à gauche de la figure 2, par exemple en effectuant un quart de tour. De préférence, la position déployée est mise en oeuvre en configuration opérationnelle de l'embase 2, pendant le poudrage de l'article. En position déployée, le volet escamotable 14 recouvre l'une des gouttières 11 à la façon d'un toit, en étant essentiellement parallèle aux directions X4 et Y4. Dans ce cas, le profil en chevron du volet 14 est orienté avec la pointe vers le haut, selon la direction Z4. Comme on l'a vu pour les pans 15, la forme de toit du volet 14 favorise l'écoulement de la poudre résiduelle vers des bords longitudinaux inférieurs du volet, vers la gouttière 11 située au-dessous. En position déployée, selon la direction Y4, le volet 14 s'étend du bord 16 du pan 15 auquel le volet 14 est adjacent jusqu'à la paroi 8 située par-delà la gouttière 11 que le volet 14 surplombe. De préférence, un premier bord longitudinal inférieur du le volet 14 est adjacent à ce bord 16, à une distance de jeu afin de former, avec ce bord 16, une encoche longitudinale parallèle à la direction X4 lorsque le volet est en position déployée. De préférence, un deuxième bord longitudinal inférieur du volet 14 est adjacent à la paroi 8 à une distance de jeu afin de former, avec cette paroi 8, une autre encoche longitudinale parallèle à la direction X4 lorsque le volet est en position déployée. Ainsi, en position déployée, le volet 14 recouvre la gouttière 11 tout en autorisant une admission de poudre résiduelle au sein de ladite gouttière 11, de préférence par une ou deux encoches formées aux bords longitudinaux du volet 14.

De préférence, en position déployée, les volets 14 et les pans 15 occupent la quasi-totalité d'une surface, parallèle aux directions X4 et Y4 et délimitée par les parois de contour 8 et 9, hormis pour les encoches pour l'admission de poudre dans les gouttières 11 formées à la périphérie des volets 14.

En position ouverte, chaque volet 14 découvre la gouttière longitudinale 11 qu'il surplombe, de sorte que le volet 14 recouvre moins la gouttière 11 lorsqu'il est en position ouverte comparativement à position déployée. La position ouverte est préférentiellement adoptée en configuration de nettoyage. Les ouvertures 43 sont alors avantageusement fermées et aucun article n'est préférentiellement présent dans le compartiment 3. Lorsque le volet 14 passe ainsi en position ouverte, la poudre résiduelle qui était éventuellement restée sur le volet 14, ou qui s'était éventuellement agglutinée dans les encoches formées à la périphérie du volet 14 alors que le volet 14 étant en position déployée, tombe dans la gouttière 11 juste au-dessous.

De préférence, chaque volet 14 est entièrement ou essentiellement réalisé en matière plastique polymère, ou pour le moins dans un matériau diélectrique.

De préférence, comme visible sur la figure 1, l'embase comporte des actionneurs 29, qui actionnent les volets 14 pour les faire basculer entre les positions déployée et ouverte. De préférence, chaque actionneur 29 est porté par l'une des parois 9, qui est opposée à la paroi 9 portant les extrémités d'évacuation 12. Chaque actionneur 29 comprend par exemple un vérin pneumatique, qui actionne une bielle solidaire de l'un des volets 14, pour mettre ledit volet 14 en rotation. De préférence, les actionneurs 29 sont agencés à l'extérieur du socle 4, en particulier par-delà la paroi 9 par rapport aux volets 14, de sorte à être protégés de la poudre résiduelle présente à l'intérieur de la cabine.

Pour le mode de réalisation particulier indépendant de l'invention, en variante, chaque pan 15 est constitué d'une plaque ou d'une feuille en matériau plastique polymère, ou pour le moins en matériau diélectrique.

En variante, l'une ou l'autre des extrémités 21 de la poutre 20 peut être supportée par le socle 4 par l'intermédiaire d'un seul plot antivibratoire 23 respectif, ou par un nombre de plots antivibratoires différent de deux.

En variante, pour des applications spécifiques, on prévoit que l'embase 2 comprend un seul pan oblique 15 et une seule gouttière 11 pour recevoir la poudre résiduelle ruisselant du pan oblique 15. Dans ce cas, on prévoit préférentiellement un seul volet 14 à l'aplomb de la gouttière 11. Dans ce cas, le bord supérieur 17 du pan oblique est attaché par exemple à l'une des parois 8. Dans ce cas, l'embase 2 comprend avantageusement une seule cloison 10 à laquelle le bord 16 est attaché. Le logement 13 est délimité par la cloison 10 et par ladite paroi 8. Dans ce cas, l'embase peut comporter un seul actionneur 29 actionnant le volet 14.

Alternativement, pour d'autres applications, on peut prévoir que l'embase 2 comporte un nombre respectif de pans obliques 15, de gouttières 11, de volets 14, etc. supérieur à deux.

Toute caractéristique décrite ci-avant pour tout mode de réalisation ou variante peut être mise en oeuvre dans les autres modes de réalisation et variantes décrits ci-avant.

## Revendications

1. Embase (2) pour une cabine de poudrage, l'embase (2) comprenant :
• un socle (4), par l'intermédiaire duquel la cabine est destinée à reposer sur un sol (1), le socle (4) étant configuré pour supporter un compartiment de poudrage (3) de la cabine ; et
• un plancher (5), qui est supporté par le socle (4) et qui est configuré pour délimiter le bas du compartiment de poudrage (3) ;
dans laquelle:
• le plancher (5) comprend deux pans obliques (15), qui sont inclinés par rapport à l'horizontale (X4, Y4) et qui sont configurés pour délimiter le bas du compartiment de poudrage (3) de la cabine, ces pans obliques (15) présentant chacun un bord supérieur (17) et étant jointifs à leur bord supérieur (17) respectif ; et
• les deux pans obliques (15) sont poreux de façon à être perméables à l'air et imperméables à de la poudre résiduelle issue d'un poudrage d'un article au sein du compartiment de poudrage.

2. Embase (2) selon la revendication 1, dans laquelle chaque pan oblique (15) présente une inclinaison d'un angle (A15) compris entre 5 et 45 degrés par rapport à l'horizontale (X4, Y4), lorsque l'embase (2) repose sur le sol (1) par l'intermédiaire du socle (4), de préférence entre 10 et 20 degrés.

3. Embase (2) selon l'une quelconque des revendications précédentes, dans laquelle l'embase (2) comprend un vibrateur (26), qui est configuré pour mettre en vibration les pans obliques (15) par rapport au socle (4).

4. Embase (2) selon la revendication 3, dans laquelle :
• le socle (4) comprend deux parois de contour transversales (9) opposées, chaque pan oblique (15) reliant les deux parois de contour transversales (9) entre elles ; et
• l'embase (2) comprend une poutre (20) supportant chaque pan oblique (15) et le vibrateur (26), s'étendant sous les pans obliques (15), et comprenant deux extrémités de poutre (21) opposées, par l'intermédiaire desquelles la poutre (20) est attachée respectivement aux deux parois de contour transversales (9).

5. Embase (2) selon la revendication 4, dans laquelle chaque extrémité de poutre (21) est attachée à l'une des deux parois de contour transversales (9) par l'intermédiaire d'au moins un plot antivibratoire (23) appartenant à l'embase (2).

6. Embase (2) selon l'une quelconque des revendications précédentes, dans laquelle :
• chaque pan oblique (15) présente un bord inférieur (16) qui est fixement attaché à une cloison longitudinale (10) appartenant au socle (4) ;
• le socle (4) comprend au moins une gouttière longitudinale (11), qui est délimitée par la cloison longitudinale (10), s'étend sous le plancher (5), est ouverte en direction du plancher (5), et présente une extrémité d'évacuation (12) par l'intermédiaire de laquelle ladite au moins une gouttière (11) débouche à l'extérieur de l'embase (2) ; et
• le plancher (5) comprend au moins un volet escamotable (14) qui est mobile entre :
◆ une position déployée, dans laquelle ledit au moins un volet escamotable (14) recouvre ladite au moins une gouttière longitudinale (11), et
◆ une position ouverte, dans laquelle ledit au moins un volet escamotable (14) découvre ladite au moins une gouttière longitudinale (11) comparativement à position déployée.

7. Embase (2) selon la revendication 6, dans laquelle ledit au moins un volet escamotable (14) est mobile entre la position déployée et la position ouverte en étant rotatif par rapport au socle (4).

8. Embase (2) selon l'une quelconque des revendications précédentes, comprenant un moyen (18) d'introduction d'air sous pression sous les pans obliques (15), l'embase (2) étant configurée pour que l'air sous pression ainsi introduit traverse les pans obliques (15) poreux vers l'intérieur du compartiment de poudrage (3), pour décrocher de la poudre résiduelle présente sur les pans obliques (15).

9. Embase (2) selon l'une quelconque des revendications précédentes, dans laquelle le plancher (5) comprend un tissu tendu qui forme les pans obliques (15).

10. Cabine de poudrage comprenant :
• une embase (2) selon l'une quelconque des revendications précédentes, et
• le compartiment de poudrage (3), qui est supporté par le socle (4) et dont le bas est délimité par le plancher (5).

## Patentansprüche

1. Sockel (2) für eine Pulverbeschichtungskabine, wobei der Sockel (2) umfasst:
• eine Basis (4), über den die Kabine auf einem Boden (1) stehen soll, wobei die Basis (4) derart konfiguriert ist, dass sie eine Pulverbeschichtungskammer (3) der Kabine trägt, und
• einen von der Basis (4) getragenen Fußboden (5), der derart konfiguriert ist, dass er die Unterseite der Pulverbeschichtungskammer (3) abgrenzt,
wobei:
• der Fußboden (5) zwei schräge Flächen (15) umfasst, die zur Horizontalen (X4, Y4) geneigt sind und derart konfiguriert sind, dass sie die Unterseite der Pulverbeschichtungskammer (3) der Kabine abgrenzen, wobei die Flächen (15) jeweils eine Oberkante (17) aufweisen und an der jeweiligen Oberkante (17) fluchtend sind, und
• die beiden schrägen Flächen (15) porös sind, sodass sie luftdurchlässig und für aus der Pulverbeschichtung eines Artikels im Inneren der Pulverbeschichtungskammer resultierende Pulverreste undurchlässig sind.

2. Sockel (2) nach Anspruch 1, wobei jede schräge Fläche (15) zur Horizontalen (X4, Y4) in einem Winkel (A15) zwischen 5 und 45°, vorzugsweise zwischen 10 und 20°, abgeneigt ist, wenn der Sockel (2) über die Basis (4) auf dem Boden (1) steht.

3. Sockel (2) nach einem der vorstehenden Ansprüche, wobei der Sockel (2) einen Vibrator (26) umfasst, der derart konfiguriert ist, dass er die schrägen Flächen (15) relativ zur Basis (4) in Schwingungen versetzt.

4. Sockel (2) nach Anspruch 3, wobei:
• die Basis (4) zwei einander entgegengesetzte querlaufende Konturwände (9) umfasst, wobei jede schräge Fläche (15) die querlaufenden Konturwände (9) verbindet, und
• der Sockel (2) einen sich unter den schrägen Flächen (15) erstreckenden Träger (20) umfasst, der jede schräge Fläche (15) und den Vibrator (26) trägt und zwei entgegengesetzte Enden (21) umfasst, über die der Träger (20) jeweils an den beiden querlaufenden Konturwenden (9) befestigt ist.

5. Sockel (2) nach Anspruch 4, wobei jedes Ende (21) über mindestens einen zum Sockel (2) gehörenden Schwingungsdämpfer (23) an einer der beiden querlaufenden Konturwände (9) befestigt ist.

6. Sockel (2) nach einem der vorstehenden Ansprüche, wobei
• jede schräge Fläche (15) eine an einem zur Basis (4) gehörenden Längsschrott (10) fixierte Unterkante (16) aufweist;
• die Basis (4) mindestens eine Längsrinne (11) umfasst, die durch das Längsschott (10) abgegrenzt ist, sich unter dem Fußboden (5) erstreckt, in Richtung des Fußbodens (5) offen ist und ein Abfuhrende (12) aufweist, über das die mindestens eine Rinne (11) an die Außenseite des Sockels (2) mündet, und
• der Fußboden (5) mindestens eine versenkbare Klappe (14) umfasst, die beweglich ist zwischen
◆ einer Einsatzstellung, in der die mindestens eine versenkbare Klappe (14) die mindestens eine Längsrinne (11) deckt, und
◆ einer geöffneten Stellung, in der die mindestens eine versenkbare Klappe (14) die mindestens eine Längsrinne (11) im Vergleich zur Einsatzstellung nicht deckt.

7. Sockel (2) nach Anspruch 6, wobei die mindestens eine versenkbare Klappe (14) beweglich ist zwischen der Einsatzstellung und der geöffneten Stellung und dabei relativ zur Basis (4) rotierbar ist.

8. Sockel (2) nach einem der vorstehenden Ansprüche, umfassend ein Mittel (18) zum Zuführen von Druckluft unter die schrägen Flächen (15), wobei der Sockel (2) derart konfiguriert ist, dass die derart zugeführte Druckluft die porösen schrägen Flächen (15) hin zum Inneren der Pulverbeschichtungskammer (3) durchquert, um an den schrägen Flächen (15) verbleibende etwaige Pulverreste zu entfernen.

9. Sockel (2) nach einem der vorstehenden Ansprüche, wobei der Fußboden (5) ein die schrägen Flächen (15) bildendes gespanntes Gewebe umfasst.

10. Pulverbeschichtungskabine, umfassend:
• einen Sockel (2) nach einem der vorstehenden Ansprüche und
• die von der Basis (4) getragene Pulverbeschichtungskammer (3), deren Unterseite durch den Fußboden (5) abgegrenzt ist.

## Claims

1. A base (2) for a powder coating booth, the base (2) comprising:
• a base structure (4), through which the booth is intended to rest on a floor (1), the base structure (4) being configured to support a powder coating compartment (3) of the booth; and
• a floor (5), which is supported by the base structure (4) and is configured to delimit the bottom of the powder coating compartment (3);
wherein:
• the floor (5) comprises two oblique panels (15), which are inclined with respect to the horizontal (X4, Y4) and which is configured to delimit the bottom of the powder coating compartment (3) of the booth, these oblique panels (15) each having an upper edge (17) and being joined to their respective upper edge (17); and
• the two oblique panels (15) are porous so as to be air permeable and impermeable to residual powder from a powder coating of an article within the powder coating compartment.

2. The base (2) according to claim 1, wherein each oblique panel (15) has an inclination of an angle (A15) between 5 and 45 degrees with respect to the horizontal (X4, Y4), when the base (2) rests on the floor (1) via the base structure (4), preferably between 10 and 20 degrees.

3. The base (2) according to any one of the preceding claims, wherein the base (2) comprises a vibrator (26), which is configured to vibrate the oblique panels (15) relative to the base structure (4).

4. The base (2) according to claim 3, wherein:
• the base structure (4) comprises two opposing transverse contour walls (9), each oblique panel (15) connecting the two transverse contour walls (9) to each other; and
• the base (2) comprises a beam (20) supporting each oblique panel (15) and the vibrator (26), extending under the oblique panels (15), and comprising two opposite beam ends (21), via which the beam (20) is attached respectively to the two transverse contour walls (9).

5. The base (2) according to claim 4, wherein each beam end (21) is attached to one of the two transverse contour walls (9) via at least one anti-vibration pad (23) belonging to the base (2).

6. The base (2) according to any one of the preceding claims, wherein:
• each oblique panel (15) has a lower edge (16) which is permanently attached to a longitudinal bulkhead (10) belonging to the base structure (4);
• the base structure (4) comprises at least one longitudinal gutter (11), which is bounded by the longitudinal bulkhead (10), extends under the floor (5), is open towards the floor (5), and has a discharge end (12) through which said at least one gutter (11) opens out of the base (2); and
• the floor (5) includes at least one retractable flap (14) which is movable between:
• a deployed position, in which said at least one retractable flap (14) covers said at least one longitudinal gutter (11), and
• an open position, in which said at least one retractable flap (14) uncovers said at least one longitudinal gutter (11) compared to the extended position.

7. The base (2) according to claim 6, wherein said at least one retractable flap (14) is movable between the extended position and the open position by being rotatable relative to the base structure (4).

8. The base (2) according to any one of the preceding claims, comprising means (18) for introducing pressurized air under the oblique panels (15), the base (2) being configured so that the pressurized air thus introduced passes through the porous oblique panels (15) towards the interior of the powder coating compartment (3), to detach residual powder present on the oblique panels (15).

9. The base (2) according to any one of the preceding claims, wherein the floor (5) comprises a taut fabric which forms the oblique panels (15).

10. A powder coating booth comprising:
• a base (2) according to any one of the preceding claims, and
• the powder coating compartment (3), which is supported by the base structure (4) and whose bottom is delimited by the floor (5).
